(19) Europäisches Patentamt
European Patent Office
Office européen des brevets

(11) EP 4 676 149 A2

(12) EUROPEAN PATENT APPLICATION
published in accordance with Art. 153(4) EPC

(43) Date of publication:
07.01.2026 Bulletin 2026/02

(51) International Patent Classification (IPC):
H04W 72/231 (2023.01)    H04L 5/00 (2006.01)
H04L 1/18 (2023.01)    H04W 72/04 (2023.01)

(21) Application number: 24785094.4

(22) Date of filing: 27.03.2024

(52) Cooperative Patent Classification (CPC):
H04L 1/18; H04L 5/00; H04W 72/04; H04W 72/231

(86) International application number:
PCT/KR2024/003867

(87) International publication number:
WO 2024/210387 (10.10.2024 Gazette 2024/41)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 06.04.2023  KR 20230045298
11.08.2023  KR 20230105459

(71) Applicant: Samsung Electronics Co., Ltd.
Suwon-si, Gyeonggi-do 16677 (KR)

(72) Inventors:
• BAEK, Sangkyu
  Suwon-si Gyeonggi-do 16677 (KR)
• KANG, Hyunjeong
  Suwon-si Gyeonggi-do 16677 (KR)

(74) Representative: Gulde & Partner
Patent- und Rechtsanwaltskanzlei mbB
Berliner Freiheit 2
10785 Berlin (DE)

(54) **METHOD AND APPARATUS FOR SUPPORTING PLURALITY OF CG OCCASIONS WITHIN PERIOD IN WIRELESS COMMUNICATION SYSTEM**

(57)    The present disclosure relates to a 5G or 6G communication system for supporting higher data transmission rates. Specifically, the present disclosure provides a method and an apparatus for efficiently supporting a plurality of CG occasions within a period.

FIG.4

**Description**

[Technical Field]

The disclosure relates to a wireless communication system (or mobile communication system). Specifically, the disclosure relates to a method and a device for supporting multiple configured grant (CG) occasions within a period in a wireless communication system (or mobile communication system).

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, demands for improving procedures related to CG (Configured Grant) are growing daily with the advancement of communication systems.

[Disclosure of Invention]

[Technical Problem]

The disclosure is to provide a method and a device for improving a CG configuration procedure and a CG operation procedure in a wireless communication system (or mobile communication system). In particular, the disclosure is to provide a method for supporting multiple CG occasions within a period.

[Solution to Problem]

A method performed by a terminal according to an embodiment of the disclosure includes: receiving configuration information on a configured grant (CG) from a base station; based on the configuration information, identifying multiple CG physical uplink shared channels (PUSCHs) within a period; identifying multiple hybrid automatic repeat request (HARQ) process identities (IDs) for the multiple CG PUSCHs; and transmitting the multiple CG PUSCHs to the base station within the period according to the multiple HARQ process IDs, wherein an HARQ process ID for a CG PUSCH among the multiple CG PUSCHs is determined based on the order of the CG PUSCH within the period.

A method performed by a base station according to an embodiment of the disclosure includes: transmitting configuration information on a configured grant (CG) to a terminal; and receiving multiple CG physical uplink shared channels (PUSCHs) from the terminal within a period based on the configuration information according to multiple hybrid automatic repeat request (HARQ) identities (IDs) for the multiple CG PUSCHs, wherein an HARQ process ID for a CG PUSCH among the multiple CG PUSCHs is determined based on the order of the CG PUSCH within the period.

A terminal according to an embodiment of the disclosure includes: a transceiver; and a controller connected to the transceiver, wherein the controller is configured to: receive configuration information on a configured grant (CG) from a base station; based on the configuration information, identify multiple CG physical uplink shared channels (PUSCHs) within a period; identify multiple hybrid automatic repeat request (HARQ) process identities (IDs) for the multiple CG PUSCHs; and transmit the multiple CG PUSCHs to the base station within the period according to the multiple HARQ process IDs, wherein an HARQ process ID for a CG PUSCH among the multiple CG PUSCHs is determined based on the order of the CG PUSCH within the period.

A base station according to an embodiment of the disclosure includes: a transceiver; and a controller connected to the transceiver, wherein the controller is configured to: transmit configuration information on a configured grant (CG) to a terminal; and receive multiple CG physical uplink shared channels (PUSCHs) from the terminal within a period based on the configuration information according to multiple hybrid automatic repeat request (HARQ) identities (IDs) for the multiple CG PUSCHs, wherein an HARQ process ID for a CG PUSCH among the multiple CG PUSCHs is determined based on the order of the CG PUSCH within the period.

[Advantageous Effects of Invention]

According to various embodiments proposed in the disclosure, CG configuration and CG operation procedures can be efficiently performed. In particular, multiple CG occasions can be efficiently supported within a given period so that communication efficiency can be increased.

[Brief Description of Drawings]

FIG. 1 is a diagram illustrating a configured grant (CG) transmission operation scheme according to an embodiment of the disclosure.
FIG. 2 illustrates a scheme by which a hybrid automatic repeat request (HARQ) process identity (ID) of a CG resource is configured in relation to an embodiment of the disclosure.
FIG. 3 illustrates a scheme by which an HARQ process ID of a CG resource is configured in relation to another embodiment of the disclosure.
FIG. 4 illustrates a scheme by which an HARQ process ID of a CG resource is configured in relation to another embodiment of the disclosure.

FIG. 5 illustrates a scheme by which an HARQ process ID of a CG resource is configured in relation to another embodiment of the disclosure.

FIG. 6 illustrates a scheme by which an HARQ process ID of a CG resource is configured in relation to another embodiment of the disclosure.

FIG. 7 illustrates a scheme by which a position of a CG resource and an HARQ process ID are configured in relation to another embodiment of the disclosure.

FIG. 8 illustrates a scheme by which a position of a CG resource and an HARQ process ID are configured in relation to another embodiment of the disclosure.

FIG. 9 illustrates a scheme by which an HARQ process ID of a CG resource is configured in relation to another embodiment of the disclosure.

FIG. 10 illustrates a scheme by which an HARQ process ID of a CG resource is configured in relation to another embodiment of the disclosure.

FIG. 11 illustrates a structure of a base station according to an embodiment of the disclosure.

FIG. 12 illustrates a structure of a UE according to an embodiment of the disclosure.

[Mode for the Invention]

Hereinafter, embodiments of the disclosure will be described in detail with reference to the accompanying drawings.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The following detailed description of embodiments of the disclosure is mainly directed to New RAN (NR) as a radio access network and Packet Core (5G system or 5G core network or next generation core (NG Core)) as a core network in the 5G mobile communication standards specified by the 3rd generation partnership project (3GPP) that is a mobile communication standardization group, but based on determinations by those skilled in the art, the main idea of the disclosure may be applied to other communication systems having similar backgrounds through some modifications without significantly departing from the scope of the disclosure.

In the following description, some of terms and names defined in the 3GPP standards (standards for 5G, NR, LTE, or similar systems) may be used for the sake of descriptive convenience. However, the disclosure is not limited by these terms and names, and may be applied in the same way to systems that conform other standards.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used herein, and other terms referring to subjects having equivalent technical meanings may be used.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, higher signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

In the following description of the disclosure, terms and names defined in the 3rd generation partnership project new radio (3GPP NR) or 3GPP long term evolution (3GPP LTE) standards will be used for the sake of descriptive convenience. However, the disclosure is not limited by these terms and names, and may be applied in the same way to systems that conform other standards. In the disclosure, the term "g NB" may be interchangeably used with the term "e NB" for the sake of descriptive convenience. That is, a base station described as "eNB" may refer to "gNB". Furthermore, the term "terminal" may refer to not only a mobile phone, an MTC device, an NB-IoT device, and a sensor, but also other wireless communication devices.

In the following description, a base station (BS) is an entity that allocates resources to terminals, and may be at least one of a next-generation Node B (gNB), an eNode B (eNB), a Node B, a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above.

In particular, the disclosure may be applied to 3GPP NR (5th generation mobile communication standard). In addition, the disclosure may be applied to intelligent services (e.g., smart homes, smart buildings, smart cities, smart cars or connected cars, healthcare, digital education, retail business, security and safety-related services, etc.) on the basis of 5G communication technology and IoT-related technology. In the disclosure, the term "eNB" may be interchangeably used with the term "gNB" for the sake of descriptive convenience. That is, a base station described as "eNB" may refer to "gNB". In addition, the term "terminal" may refer to not only mobile phones, NB-IoT devices, and sensors, but also any other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a UE transmits data or control signals to a base station, and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to some embodiments, eMBB may aim at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20MHz in a frequency band of 3 to 6GHz or 6GHz or more, instead of transmitting signals using a transmission bandwidth up to 20MHz in a band of 2GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5ms, and may also require a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. Therefore, for the services supporting URLLC, a 5G system must provide a transmit time interval (TTI) shorter than those of other services, and also may require a design for assigning a large number of resources in a frequency band in order to secure reliability of a communication link.

In the following description of embodiments of the disclosure, LTE, LTE-A, LTE Pro, or 5G (or NR, next-generation mobile communication) systems will be described by way of example, but the embodiments of the disclosure may be applied to other communication systems having similar backgrounds or channel types. In addition, based on determinations by those skilled in the art, the embodiments of the disclosure may be applied to other communication systems through some modifications without significantly departing from the scope of the disclosure.

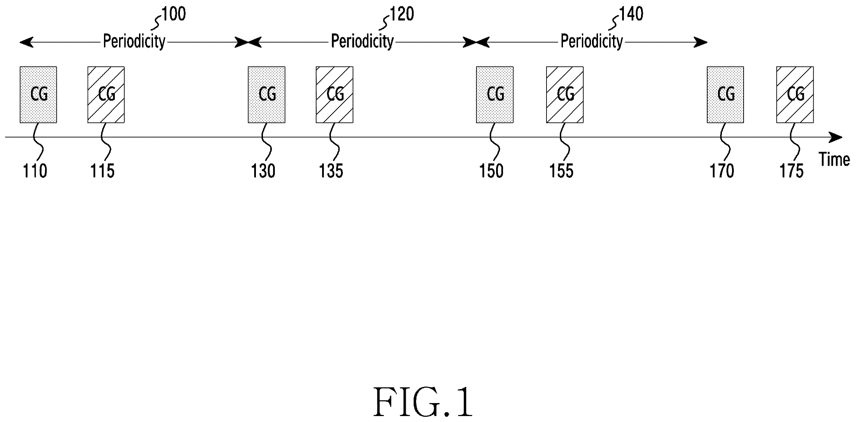

FIG. 1 is a diagram illustrating a configured grant transmission operation scheme according to an embodiment of the disclosure.

In a wireless communication system, an uplink radio resource (or uplink grant) transmitted by a UE to a base station may be classified into dynamic grant (DG) and configured grants (CG) according to a resource allocation scheme. DG is a radio resource in which a base station designates a position of a resource via downlink control information (DCI) on physical downlink control channel (PDCCH), and DG refers to a one-time resource. CG is a radio resource in which a period is configured by a base station via a radio resource control (RRC) message, and the resource repeats at regular intervals. CG is classified into Type-1 CG and Type-2 CG according to a format, wherein Type-1 CG is immediately activated when configured by an RRC message, and Type-2 CG is configured by an RRC message and then configures and activates a position of a first resource via DCI on a PDCCH physical channel by using a configured scheduling - radio network temporary identity (CS-RNTI). In a service such as extended reality (XR), traffic may occur periodically, and the amount of periodically generated data may be large in order to transmit high-definition image information, etc. To this end, configuration of multiple CG transmission resources within a single period may be required. Even for non-periodic traffic, CG transmission resources may be used to satisfy requirements for short latency.

The embodiment of FIG. 1 illustrates a scheme by which a CG resource is configured.

CG refers to configuring of uplink radio resources (i.e., uplink grants) at regular intervals, i.e., periods 100, 120, and 140. However, the number of CG resources configured and activated in a single period may be one or more. In the embodiment of FIG. 1, it is illustrated that two CG resources are configured in a single period, but the number of CG resources configured in a single period may vary depending on the embodiment. In order to configure multiple CG resources in a single period, the number of CG resources configured in a single period may be configured via an RRC message or via DCI on a PDCCH. In an embodiment, instead of the number of CG resources configured in a single period, n-th CG resources may be individually configured for each CG resource within each period.

The embodiment of FIG. 1 illustrates that first (n=0) CG resources 110, 130, 150, and 170 and second (n=1) CG resources 115, 135, 155, and 175 are separately configured for respective periods. In the disclosure, n-th CG resources configured within respective periods are referred to as an n-th CG subset. The embodiment of FIG. 1 illustrates that the CG resources are not positioned in adjacent symbols within each period, but multiple CG resources may be located in adjacent symbols on the time axis.

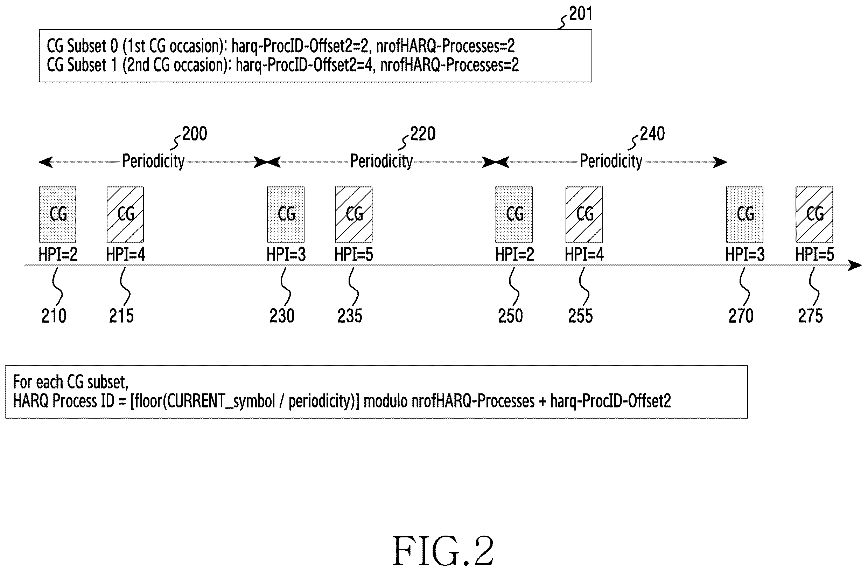

The embodiment of FIG. 2 illustrates a scheme by which an HARQ process ID of a CG resource is configured.

According to an embodiment, when two or more CG resources are configured in a single period, a problem of failing to secure a time required for retransmission due to overlapping HARQ process IDs can be prevented by configuring a different HARQ process ID for each CG resource in each CG subset configured within the period. To this end, the embodiment of FIG. 2 illustrates a method of configuring an HARQ process ID range for each CG subset. An HARQ process ID offset (harq-ProcID-Offset2) and the number of HARQ processes (nrofHARQ-Processes) may be configured 201 for each CG subset in CG Config of an RRC configuration transmitted by a base station to a UE. In this case, an HARQ process ID for CG resources (occasions) in each CG subset may be determined as shown in Equation 1 below.

$$\text{HARQ Process ID} = [floor(\text{CURRENT\_symbol} / \text{periodicity})] \text{ modulo nrofHARQ-Processes} + \text{harq-ProcID-Offset2} \qquad \text{[Equation 1]}$$

In Equation 1, periodicity denotes CG period, and CURRENT_symbol is a value of (SFN * numberOfSlotsPer-Frame * numberOfSymbolsPerSlot + slot number in the frame * numberOfSymbolsPerSlot + symbol number in the slot) and may refer to a position of a symbol in an SFN period by converting a current system frame number (SFN), a slot number, and a symbol number into symbol units. In an embodiment, CURRENT_symbol may be calculated based on a first symbol of uplink transmission for CG resources (or CG occasions) of each CG subset. In another embodiment, CURRENT_symbol may be used to determine HARQ process IDs for all CG subsets, based on a first symbol of uplink transmission for a first CG resource within the CG period.

In this case, an HARQ process being configured for a CG subset may refer to a case in which there is an activated CG subset and the HARQ process is greater than or equal to an HARQ process ID offset of the CG subset and is smaller than the sum of the HARQ process ID offset and the number of HARQ processes. If harq-ProcID-Offset2 is not configured, the UE and the base station may interpret and operate in the same manner as if harq-ProcID-Offset2 is 0. A corresponding HARQ process being configured for a CG with respect to a CG configuration may refer to a case in which there are activated CGs and the HARQ process is greater than or equal to an HARQ process ID offset of a CG subset among the CGs and is smaller than the sum of the HARQ process ID offset and the number of HARQ processes. If harq-ProcID-Offset2 is not configured, the UE and the base station may interpret and operate in the same manner as if harq-ProcID-Offset2 is 0.

In the embodiment of FIG. 2, it is assumed that there are two CG resources configured in a single period, and it is illustrated 201 that CG subset 0 (i.e., first CG resources 210, 230, 250, and 270) has an HARQ process ID offset of 2 and two HARQ processes, and that CG subset 1 (i.e., second CG resources 215, 235, 255, and 275) has an HARQ process ID offset of 4 and two HARQ processes. Based on this, across multiple periods 200, 220, and 240, HARQ process IDs (HPIs) 2 and 3 are repeated in CG subset 0 (210, 230, 250, and 270) according to an equation, and HPIs 4 and 5 are repeated in CG subset 1 (215, 235, 255, and 275).

The embodiment of FIG. 2 illustrates a method by which an HARQ process ID offset and the number of HARQ processes are configured for each CG subset. When each CG subset uses the same number of HARQ processes, according to an embodiment, the number of HARQ processes may be configured for only one CG subset, and the other CG subset may also use the same number of HARQ processes. In this case, an equation for determining an HARQ process ID may be Equation 2 below.

$$\text{HARQ Process ID} = [\text{floor}(CURRENT\_symbol / periodicity)] \text{ modulo nrofHARQ-Processes} + \text{harq-ProcID-Offset2}$$ [Equation 2]

The embodiment of FIG. 2 illustrates a method by which an HARQ process ID offset and the number of HARQ processes are configured for each CG subset. When each CG subset uses the same number of HARQ processes, according to an embodiment, a value of the number of HARQ processes and an HARQ process ID offset may be configured for only one CG subset, and the other CG subset may also use the same value of the number of HARQ processes. In this case, an equation for determining an HARQ process ID for each n-th (n=0, 1, 2, ...) CG subset may be Equation 3 below.

$$\text{HARQ Process ID} = [\text{floor}(CURRENT\_symbol / periodicity)] \text{ modulo nrofHARQ-Processes} + \text{harq-ProcID-Offset2} + n * \text{nrofHARQ-Processes}$$ [Equation 3]

In some embodiments, an n-th CG subset may refer to an activated CG subset among the CG subsets. In the embodiment, it is assumed that an n value is a non-negative integer, but, if n is a natural number starting from 1, an n-1 value instead of n may be used in the equation.

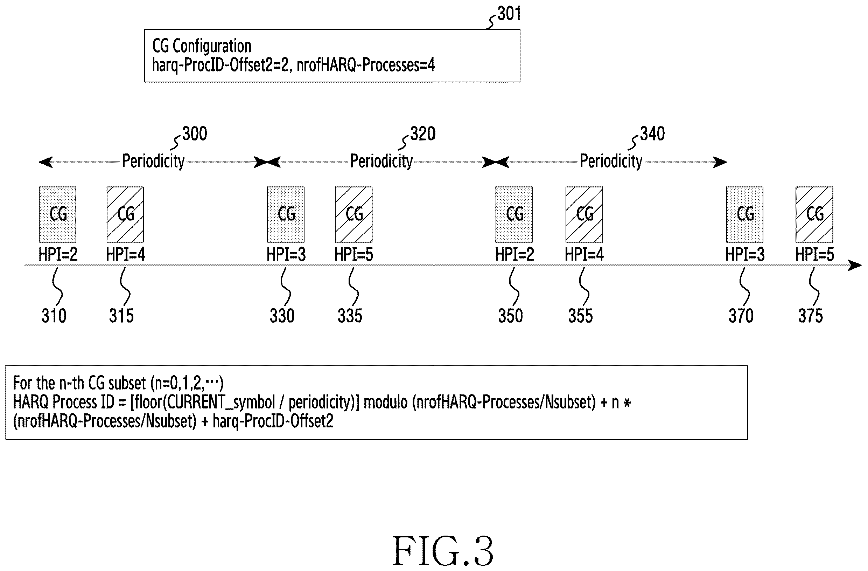

The embodiment of FIG. 3 illustrates a scheme by which an HARQ process ID of a CG resource is configured.

According to an embodiment, when two or more CG resources are configured in a single period, a problem of failing to secure a time required for retransmission due to overlapping HARQ process IDs can be prevented by configuring a different HARQ process ID for each CG resource in each CG subset configured within the period. To this end, the embodiment of FIG. 3 illustrates a method of configuring an HARQ process ID range for each CG, and configuring an HARQ process ID range for each CG subset within the HARQ process ID range of CG. An HARQ process ID offset (harq-ProcID-Offset2) of CG and the number of HARQ processes (nrofHARQ-Processes) may be configured 301 in CG Config of an RRC configuration transmitted by a base station to a UE. In this case, an HARQ process ID for CG resources (occasions) in an n-th (n=0, 1, 2, ...) CG subset may be determined as shown in Equation 4 below.

$$\text{HARQ Process ID} = [\text{floor}(CURRENT\_symbol / periodicity)] \text{ modulo (nrofHARQ-Processes/Nsubset)} + n * (\text{nrofHARQ-Processes} / \text{Nsubset}) + \text{harq-ProcID-Offset2}$$ [Equation 4]

In Equation 4, periodicity denotes CG period, Nsubset denotes the number of CGs (the number of CG subsets) within the CG period, and CURRENT_symbol is a value of (SFN * numberOfSlotsPerFrame * numberOfSymbolsPerSlot + slot number in the frame * numberOfSymbolsPerSlot + symbol number in the slot) and may refer to a position of a symbol in an SFN period by converting a current system frame number (SFN), a slot number, and a symbol number into symbol units. In an embodiment, CURRENT _symbol may be calculated based on a first symbol of uplink transmission for CG resources (or CG occasions) of each CG subset. In another embodiment, CURRENT_symbol may be used to determine HARQ process IDs for all CG subsets, based on a first symbol of uplink transmission for a first CG resource within the CG period.

In this case, an HARQ process being configured for a CG with respect to a CG configuration may refer to a case in which there is an activated CG and the HARQ process is greater than or equal to an HARQ process ID offset of the CG and is smaller than the sum of the HARQ process ID offset and the number of HARQ processes. If harq-ProcID-Offset2 is not configured, the UE and the base station may interpret and operate in the same manner as if harq-ProcID-Offset2 is 0.

In the embodiment of FIG. 3, it is assumed that there are two CG resources configured in a single period, and it is illustrated 301 that an HARQ process ID offset of CG is 2 and the number of HARQ processes is 4. Based on this, across multiple periods 300, 320, and 340, each CG subset uses a value obtained by dividing the number of HARQ processes by the number of CGs (the number of CG subsets) within the period. Based on this, HPIs 2 and 3 are repeated in CG subset 0 (the first CG resources 210, 230, 250, and 270) according to an equation, and HPIs 4 and 5 are repeated in CG subset 1 (the second CG resources 215, 235, 255, and 275).

In an embodiment, an n-th CG subset may refer to an activated CG subset among the CG subsets. In the embodiment, it is assumed that an n value is a non-negative integer, but, if n is a natural number starting from 1, an n-1 value instead of n may be used in the equation.

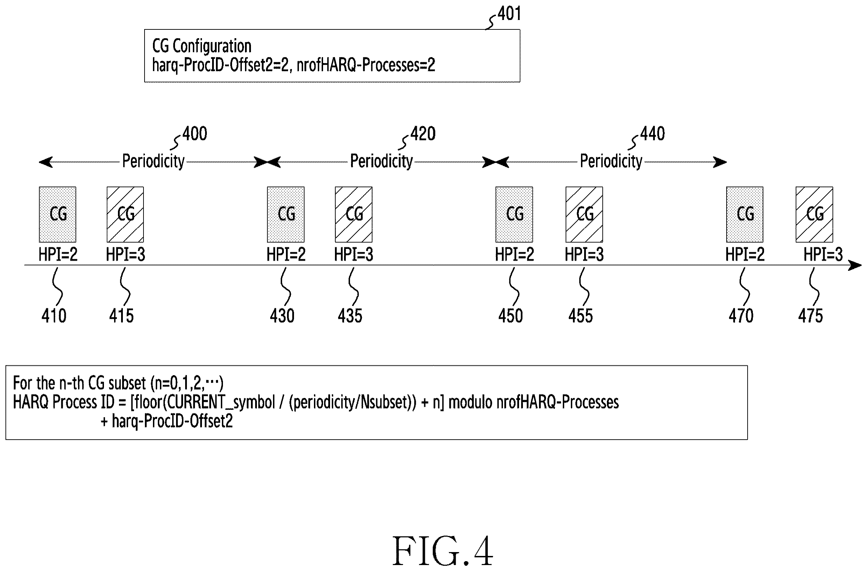

The embodiment of FIG. 4 illustrates a scheme by which an HARQ process ID of a CG resource is configured.

According to an embodiment, when two or more CG resources are configured in a single period, a problem of failing to secure a time required for retransmission due to overlapping HARQ process IDs can be prevented by configuring a different HARQ process ID for each CG resource in each CG subset configured within the period. To this end, the embodiment of FIG. 4 illustrates a method of configuring an HARQ process ID range for each CG, and configuring an HARQ process ID range for each CG resource within the HARQ process ID range of CG. An HARQ process ID offset (harq-ProcID-Offset2) of CG and the number of HARQ processes (nrofHARQ-Processes) may be configured 401 in CG Config of an RRC configuration transmitted by a base station to a UE. In this case, an HARQ process ID for CG resources (occasions) in an n-th (n=0, 1, 2, ...) CG subset may be determined as shown in Equation 5 below.

HARQ Process ID = [floor(CURRENT _symbol / (periodicity / Nsubset)) + n] modulo nrofHARQ-Processes + harq-ProcID-Offset2      [Equation 5]

In Equation 5, periodicity denotes CG period, Nsubset denotes the number of CGs (the number of CG subsets) within the CG period, and CURRENT_symbol is a value of (SFN * numberOfSlotsPerFrame * numberOfSymbolsPerSlot + slot number in the frame * numberOfSymbolsPerSlot + symbol number in the slot) and may refer to a position of a symbol in an SFN period by converting a current system frame number (SFN), a slot number, and a symbol number into symbol units. In an embodiment, CURRENT _symbol may be calculated based on a first symbol of uplink transmission for CG resources (or CG occasions) of each CG subset. In another embodiment, CURRENT_symbol may be used to determine HARQ process IDs for all CG subsets, based on a first symbol of uplink transmission for a first CG resource within the CG period.

In another embodiment, an HARQ process ID for CG resources (occasions) in an n-th (n=0, 1, 2, ...) CG subset may be determined as shown in Equation 5-1 below.

HARQ Process ID = [Nsubset * floor(CURRENT_symbol / periodicity ) + n] modulo nrofHARQ-Processes + harq-ProcID-Offset2      [Equation 5-1]

In Equation 5-1, periodicity denotes CG period, Nsubset denotes the number of CGs (the number of CG subsets) within the CG period, and CURRENT_symbol is a value of (SFN * numberOfSlotsPerFrame * numberOfSymbolsPerSlot + slot number in the frame * numberOfSymbolsPerSlot + symbol number in the slot) and may refer to a position of a symbol in an SFN period by converting a current system frame number (SFN), a slot number, and a symbol number into symbol units. In an embodiment, CURRENT _symbol may be calculated based on a first symbol of uplink transmission for CG resources (or CG occasions) of each CG subset. In another embodiment, CURRENT_symbol may be used to determine HARQ process IDs for all CG subsets, based on a first symbol of uplink transmission for a first CG resource (n=0) within the CG period.

In this case, an HARQ process being configured for a CG with respect to a CG configuration may refer to a case in which there is an activated CG and the HARQ process is greater than or equal to an HARQ process ID offset of the CG and is smaller than the sum of the HARQ process ID offset and the number of HARQ processes. If harq-ProcID-Offset2 is not configured, the UE and the base station may interpret and operate in the same manner as if harq-ProcID-Offset2 is 0.

In the embodiment of FIG. 4, it is assumed that there are two CG resources configured in a single period, and it is illustrated 401 that an HARQ process ID offset of CG is 2 and the number of HARQ processes is 2. Based on this, across multiple periods 400, 420, and 440, the CG resources configured in the CG configuration use an HARQ process ID according to the equation regardless of the CG subset. In the embodiment of FIG. 4, HPIs 2 and 3 may be repeatedly configured in the respective CG resources 410, 415, 430, 435, 450, 455, 470, and 475.

In an embodiment, an n-th CG subset may refer to an activated CG subset among the CG subsets. In the embodiment, it is assumed that an n value is a non-negative integer, but, if n is a natural number starting from 1, an n-1 value instead of n may be used in the equation.

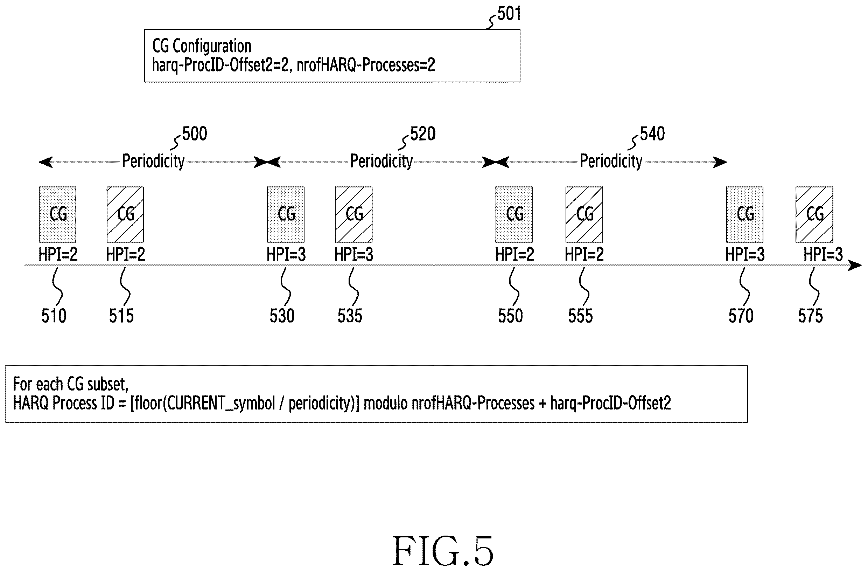

The embodiment of FIG. 5 illustrates a scheme by which an HARQ process ID of a CG resource is configured.

According to an embodiment, when two or more CG resources are configured in a single period, an HARQ process ID value to be used for each CG resource of each CG subset configured within the period may be determined. To this end, the embodiment of FIG. 5 illustrates a method of configuring an HARQ process ID range for each CG, and configuring an HARQ process ID range for each CG resource within the HARQ process ID range of CG. An HARQ process ID offset (harq-ProcID-Offset2) of CG and the number of HARQ processes (nrofHARQ-Processes) may be configured 501 in CG Config of an RRC configuration transmitted by a base station to a UE. In this case, an HARQ process ID for CG resources (occasions) in each CG subset may be determined as shown in Equation 6 below.

HARQ Process ID = [floor(CURRENT_symbol / periodicity)] modulo nrofHARQ-Processes + harq-ProcID-Offset2      [Equation 6]

In Equation 6, periodicity denotes CG period, and CURRENT_symbol is a value of (SFN * numberOfSlotsPerFrame * numberOfSymbolsPerSlot + slot number in the frame * numberOfSymbolsPerSlot + symbol number in the slot) and may refer to a position of a symbol in an SFN period by converting a current system frame number (SFN), a slot number, and a symbol number into symbol units. In an embodiment, CURRENT _symbol may be calculated based on a first symbol of uplink transmission for CG resources (or CG occasions) of each CG subset. In another embodiment, CURRENT_symbol may be used to determine HARQ process IDs for all CG subsets, based on a first symbol of uplink transmission for a first CG resource within the CG period.

In this case, an HARQ process being configured for a CG with respect to a CG configuration may refer to a case in which there is an activated CG and the HARQ process is greater than or equal to an HARQ process ID offset of the CG and is smaller than the sum of the HARQ process ID offset and the number of HARQ processes. If harq-ProcID-Offset2 is not configured, the UE and the base station may interpret and operate in the same manner as if harq-ProcID-Offset2 is 0.

According to the method proposed in the embodiment of FIG. 5, resources for each CG subset within a single period may all have the same HPI value. In the embodiment of FIG. 5, it is assumed that there are two CG resources configured in a single period, and it is illustrated 501 that an HARQ process ID offset of CG is 2 and the number of HARQ processes is 2. Based on this, across multiple periods 500, 520, and 540, the CG resources configured in the CG configuration use an HARQ process ID according to the equation regardless of the CG subset. In the embodiment of FIG. 5, CG resources 410 and 415 of a first period 500 use HPI 2, CG resources 530 and 535 of a second period 520 use HPI 3, CG resources 550 and 555 of a third period 540 use HPI 2, and CG resources 570 and 575 of a fourth period use HPI 3.

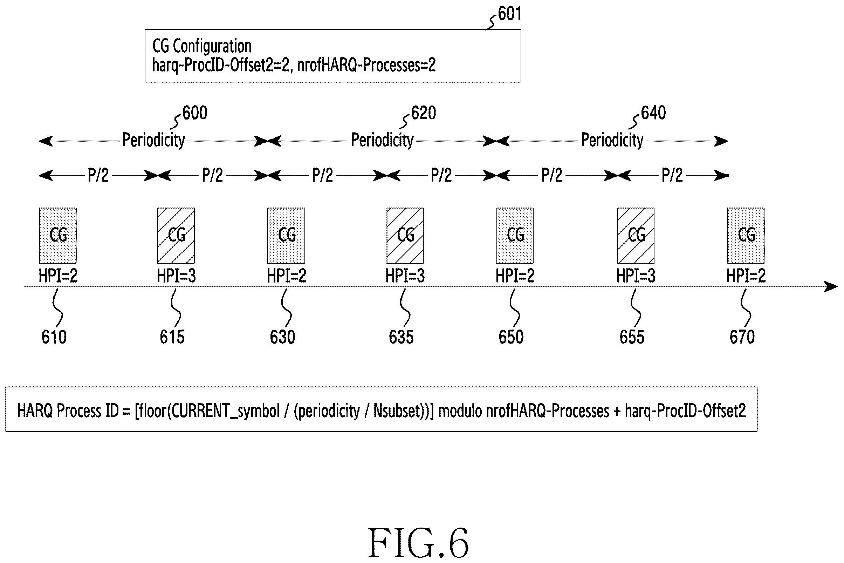

The embodiment of FIG. 6 illustrates a scheme by which an HARQ process ID of a CG resource is configured.

According to an embodiment, when two or more CG resources are configured in a single period, an HARQ process ID value to be used for each CG resource of each CG subset configured within the period may be determined. To this end, the embodiment of FIG. 6 illustrates a method of configuring an HARQ process ID range for each CG, and configuring an HARQ process ID range for each CG resource within the HARQ process ID range of CG. An HARQ process ID offset (harq-ProcID-Offset2) of CG and the number of HARQ processes (nrofHARQ-Processes) may be configured 601 in CG Config of an RRC configuration transmitted by a base station to a UE. In the embodiment of FIG. 6, it is assumed that CG resources 610, 615, 630, 635, 650, 655, and 670 in CG subsets are positioned at uniform intervals within respective periods. Such a case may have the same effect as a CG configuration of configuring an actual period to be a value obtained by dividing the period by the number of CG subsets. In this case, an HARQ process ID for CG resources (occasions) in each CG subset may be determined as shown in Equation 7 below.

$$\text{HARQ Process ID} = [\text{floor}(\text{CURRENT }\_\text{symbol} / (\text{periodicity}/N_{subset}))] \text{ modulo nrofHARQ-Processes} + \text{harq-ProcID-Offset2} \qquad \text{[Equation 7]}$$

In Equation 7, periodicity denotes CG period, Nsubset denotes the number of CGs (the number of CG subsets) within the CG period, and CURRENT_symbol is a value of (SFN * numberOfSlotsPerFrame * numberOfSymbolsPerSlot + slot number in the frame * numberOfSymbolsPerSlot + symbol number in the slot) and may refer to a position of a symbol in an SFN period by converting a current system frame number (SFN), a slot number, and a symbol number into symbol units. In an embodiment, CURRENT_symbol may be calculated based on a first symbol of uplink transmission for CG resources (or CG occasions) of each CG subset. In another embodiment, CURRENT_symbol may be used to determine HARQ process IDs for all CG subsets, based on a first symbol of uplink transmission for a first CG resource within the CG period.

In this case, an HARQ process being configured for a CG with respect to a CG configuration may refer to a case in which there is an activated CG and the HARQ process is greater than or equal to an HARQ process ID offset of the CG and is smaller than the sum of the HARQ process ID offset and the number of HARQ processes. If harq-ProcID-Offset2 is not configured, the UE and the base station may interpret and operate in the same manner as if harq-ProcID-Offset2 is 0.

In the embodiment of FIG. 6, it is assumed that there are two CG resources configured in a single period, and it is illustrated 601 that an HARQ process ID offset of CG is 2 and the number of HARQ processes is 2. Based on this, across multiple periods 600, 620, and 640, the CG resources configured in the CG configuration use an HARQ process ID according to the equation regardless of the CG subset. In the embodiment of FIG. 6, HPIs 2 and 3 may be repeatedly configured in the respective CG resources 610, 615, 630, 635, 650, 655, and 670.

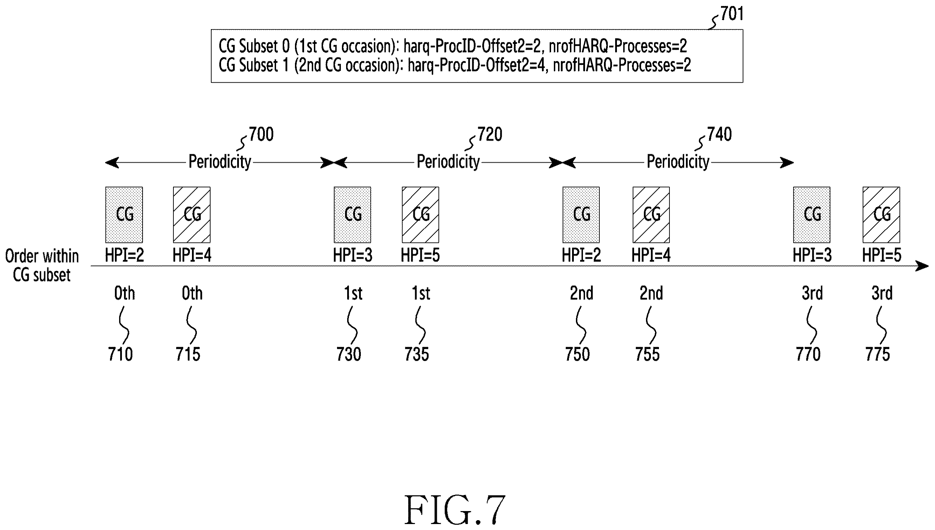

The embodiment of FIG. 7 illustrates a scheme by which a position of a CG resource and an HARQ process ID are configured.

When two or more CG resources exist in a single period, a position of an N-th CG resource of a CG subset may be configured for each CG resource of each CG subset configured within the period. For Type-1 CG, a time domain offset, an S value, etc. may be configured for each subset. Specifically, after Type-1 CG is configured, a medium access control (MAC) device may determine a position of an N-th (N=0, 1, 2, ...) resource of an n-th (n=0, 1, 2, ...) CG subset resource, as a time point that satisfies conditions of Equation 8 below.

$$[(\text{SFN} * \text{numberOfSlotsPerFrame} * \text{numberOfSymbolsPerSlot}) + (\text{slot number in the frame} * \text{numberOfSymbolsPerSlot}) + \text{symbol number in the slot}] = (\text{timeReferenceSFN} * \text{numberOfSlotsPerFrame} * \text{numberOfSymbolsPerSlot} + \text{timeDomainOffset\_subset\_n} * \text{numberOfSymbolsPerSlot} + \text{S\_subset\_n} + N * \text{periodicity}) \bmod (1024 * \text{numberOfSlotsPerFrame} * \text{numberOfSymbolsPerSlot})$$

[Equation 8]

In Equation 8, SFN denotes a current SFN value, numberOfSlotPerFrame denotes the number of slots per frame, numberOfSymbolsPerSlot denotes the number of symbols per slot, slot number in the frame denotes a current slot number within the frame, symbol number in the slot denotes a current symbol number within the slot, timeReferenceSFN denotes an SFN value that serves as a reference point for determining a CG position, timeDomainOffset_subset_n denotes a time domain offset of a CG subset, and S_subset_n denotes an S value for CG subset n.

For Type-2 CG, a start time value, etc., may be configured for each subset. Specifically, after Type-2 CG is configured, the MAC device may determine the position of the N-th (N=0, 1, 2, ...) resource of the n-th (n=0, 1, 2, ...) CG subset resource, as a time point that satisfies conditions of Equation 9 below.

$$[(\text{SFN} * \text{numberOfSlotsPerFrame} * \text{numberOfSymbolsPerSlot}) + (\text{slot number in the frame} * \text{numberOfSymbolsPerSlot}) + \text{symbol number in the slot}] = [(\text{SFN}_{\text{start\_time\_subset\_n}} * \text{numberOfSlotsPerFrame} * \text{numberOfSymbolsPerSlot} + \text{slot}_{\text{start time\_subset\_n}} * \text{numberOfSymbolsPerSlot} + \text{symbol}_{\text{start time\_subset\_n}}) + N * \text{periodicity}] \bmod (1024 * \text{numberOfSlotsPerFrame} * \text{numberOfSymbolsPerSlot})$$

[Equation 9]

In Equation 9, $\text{SFN}_{\text{start time\_subset\_n}}$ denotes an SFN offset at a CG start time of an n-th CG subset, $\text{slot}_{\text{start time\_subset\_n}}$ denotes a slot offset at the CG start time of the n-th CG subset, and $\text{symbol}_{\text{start time\_subset\_n}}$ denotes a symbol offset at the CG start time of the n-th CG subset. In an embodiment, $\text{SFN}_{\text{start time\_subset\_n}}$ or $\text{slot}_{\text{start time\_subset\_n}}$ may use the same value as that of the first (n=0) CG subset.

According to the aforementioned embodiment, when the position of the N-th CG resource of the n-th CG subset is determined, the N-th resource in the n-th CG subset may be an (m=N * Nsubset + n)th resource in the CG configuration (N=0, 1, 2, ..., and n=0, 1, 2, ...). In the embodiment, it is assumed that an n value is a non-negative integer, but, if n is a natural number starting from 1, an n-1 value instead of n may be used in the equation.

In another embodiment, the position (i.e., Offset_n) of the n-th CG subset resource may be determined a certain period of time after the position of the first CG subset among the CG subsets configured in a single period. Specifically, after Type-1 CG is configured, the MAC device may determine the position of the N-th (N=0, 1, 2, ...) resource of the n-th (n=0, 1, 2, ...) CG subset resource, as a time point that satisfies conditions of Equation 10 below.

$$[(\text{SFN} * \text{numberOfSlotsPerFrame} * \text{numberOfSymbolsPerSlot}) + (\text{slot number in the frame} * \text{numberOfSymbolsPerSlot}) + \text{symbol number in the slot}] = (\text{timeReferenceSFN} * \text{numberOfSlotsPerFrame} * \text{numberOfSymbolsPerSlot} + \text{timeDomainOffset} * \text{numberOfSymbolsPerSlot} + S + \text{Offset\_n} + N * \text{periodicity}) \bmod (1024 * \text{numberOfSlotsPerFrame} * \text{numberOfSymbolsPerSlot})$$

[Equation 10]

In Equation 10, SFN denotes a current SFN value, numberOfSlotPerFrame denotes the number of slots per frame, numberOfSymbolsPerSlot denotes the number of symbols per slot, slot number in the frame denotes a current slot number within the frame, symbol number in the slot denotes a current symbol number within the slot, timeReferenceSFN denotes an SFN value that serves as a reference point for determining a CG position, timeDomainOffset denotes a time domain offset of a CG subset, and S denotes an S value determined by a physical layer. Here, the n-th CG subset resource may start at a time point that is Offset_n after the first CG resource. The first CG resource (n=0) within the period may have an Offset_0 value of 0. In the disclosure, Offset_n is assumed to be in units of symbols, but an SFN-unit or slot-unit offset may be additionally configured according to the embodiment. If CG subsets are positioned in adjacent symbols, a value of Offset_n may be obtained by a symbol length (PUSCH duration) of the CG resource * n.

After Type-2 CG is configured, the MAC device may determine the position of the N-th (N=0, 1, 2, ...) resource of the n-th (n=0, 1, 2, ...) CG subset resource, as a time point that satisfies conditions of Equation 11 below.

$$[(\text{SFN} * \text{numberOfSlotsPerFrame} * \text{numberOfSymbolsPerSlot}) + (\text{slot number in the frame} * \text{numberOfSymbolsPerSlot}) + \text{symbol number in the slot}] = [(\text{SFN}_{\text{start time}} * \text{numberOfSlotsPerFrame} * \text{numberOfSymbolsPerSlot} + \text{slot}_{\text{start time}} * \text{numberOfSymbolsPerSlot} + \text{symbol}_{\text{start time}} + \text{Offset\_n} + N * \text{periodicity}] \bmod (1024 * \text{numberOfSlotsPerFrame} * \text{numberOfSymbolsPerSlot})$$

[Equation 11]

In Equation 11, $\text{SFN}_{\text{start time}}$ denotes an SFN offset at a first (n=0) CG start time, $\text{slot}_{\text{start time}}$ denotes a slot offset at the first (n=0) CG start time, and $\text{symbol}_{\text{start time n}}$ denotes a symbol offset at the first (n=0) CG start time. In an embodiment,

$SFN_{start\ time\_subset\_n}$ or $slot_{start\ time\_subset\_n}$ may use the same value as that of the first (n=0) CG subset. Here, the n-th CG subset resource may start at a time point that is Offset_n after the first CG resource. The first CG resource (n=0) within the period may have an Offset_0 value of 0. In the disclosure, Offset_n is assumed to be in units of symbols, but an SFN-unit or slot-unit offset may be additionally configured according to the embodiment. If CG subsets are positioned in adjacent symbols, a value of Offset_n may be obtained by a symbol length (PUSCH duration) of the CG resource * n.

According to the aforementioned embodiment, when the position of the N-th CG resource of the n-th CG subset is determined, the N-th resource in the n-th CG subset may be an (m=N * Nsubset + n)th resource in the CG configuration (N=0, 1, 2, ..., and n=0, 1, 2, ...). In the embodiment, it is assumed that an n value is a non-negative integer, but, if n is a natural number starting from 1, an n-1 value instead of n may be used in the equation.

Based on one of the schemes above, a UE and a base station may calculate the position of the N-th (N = 0, 1, 2, ...) CG resource of the n-th (n = 0, 1, 2, ...) CG subset. In addition, the UE and the base station may calculate an HARQ process ID to be used in the N-th CG resource of the n-th CG subset, as shown in Equation 12 below.

$$HARQ\ Process\ ID = [N\ modulo\ nrofHARQ\text{-}Processes] + harq\text{-}ProcID\text{-}Offset2 \qquad \text{[Equation 12]}$$

In Equation 12, nrofHARQ-Processes denotes the number of HARQ processes in the n-th CG subset, and harq-ProcID-Offset2 denotes an HARQ process ID offset of the n-th CG subset.

In the embodiment of FIG. 7, it is assumed that there are two CG resources (two CG subsets) configured in a single period, and it is illustrated that CG subset 0 (i.e., first CG resources 710, 730, 750, and 770) has an HARQ process ID offset of 2 and two HARQ processes, and that CG subset 1 (i.e., second CG resources 715, 735, 755, and 775) has an HARQ process ID offset of 4 and two HARQ processes. Based on this, across multiple periods 700, 720, and 740, HARQ process IDs (HPIs) 2 and 3 are repeated in CG subset 0 according to an equation, and HPIs 4 and 5 are repeated in CG subset 1.

The embodiment of FIG. 7 illustrates a method by which an HARQ process ID offset and the number of HARQ processes are configured for each CG subset. However, when each CG subset uses the same number of HARQ processes, a value of the number of HARQ processes may be configured for only one CG subset, and the other CG subset may also use the same value of the number of HARQ processes. In this case, a procedure of determining an HARQ process ID may be applied in the same manner as described above. harq-ProcID-Offset may also be configured only for the first (n=0) CG subset. In this case, an HARQ process ID offset for an n-th CG subset may be harq-ProcID-Offset + n * nrofHARQ-Processes. In some embodiments, the n-th CG subset may refer to an activated CG subset. In the embodiment, it is assumed that an n value is a non-negative integer, but, if n is a natural number starting from 1, an n-1 value instead of n may be used in the equation.

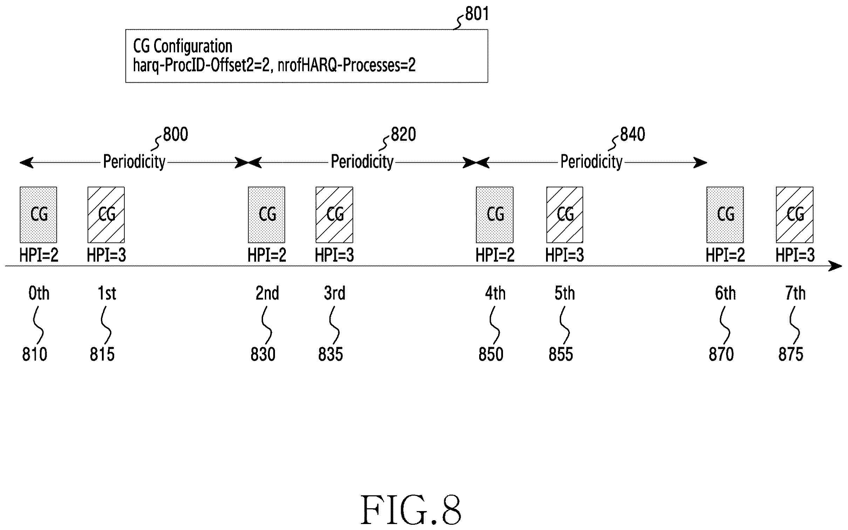

The embodiment of FIG. 8 illustrates a scheme by which a position of a CG resource and an HARQ process ID are configured.

When two or more CG resources exist in a single period, a position of an N-th CG resource of a CG subset may be configured for each CG resource of each CG subset configured within the period. For Type-1 CG, a time domain offset, an S value, etc. may be configured for each subset. Specifically, after Type-1 CG is configured, an MAC device may determine a position of an N-th (N=0, 1, 2, ...) resource of an n-th (n=0, 1, 2, ...) CG subset resource, as a time point that satisfies conditions of Equation 13 below.

$$[(SFN * numberOfSlotsPerFrame * numberOfSymbolsPerSlot) + (slot\ number\ in\ the\ frame * numberOfSymbolsPerSlot) + symbol\ number\ in\ the\ slot] = (timeReferenceSFN * numberOfSlotsPerFrame * numberOfSymbolsPerSlot + timeDomainOffset\_subset\_n * numberOfSymbolsPerSlot + S\_subset\_n + N * periodicity)\ modulo\ (1024 * numberOfSlotsPerFrame * numberOfSymbolsPerSlot) \qquad \text{[Equation 13]}$$

In Equation 13, SFN denotes a current SFN value, numberOfSlotPerFrame denotes the number of slots per frame, numberOfSymbolsPerSlot denotes the number of symbols per slot, slot number in the frame denotes a current slot number within the frame, symbol number in the slot denotes a current symbol number within the slot, timeReferenceSFN denotes an SFN value that serves as a reference point for determining a CG position, timeDomainOffset_subset_n denotes a time domain offset of a CG subset, and S_subset_n denotes an S value for CG subset n.

For Type-2 CG, a start time value, etc., may be configured for each subset. Specifically, after Type-2 CG is configured, the MAC device may determine the position of the N-th (N=0, 1, 2, ...) resource of the n-th (n=0, 1, 2, ...) CG subset resource, as a time point that satisfies conditions of Equation 14 below.

$$[(SFN * numberOfSlotsPerFrame * numberOfSymbolsPerSlot) + (\text{slot number in the frame} * numberOfSymbolsPerSlot) + \text{symbol number in the slot}] = [(SFN_{start\ time\_subset\_n} * numberOfSlotsPerFrame * numberOfSymbolsPerSlot + slot_{start\ time\_subset\_n} * numberOfSymbolsPerSlot + symbol_{start\ time\_subset\_n}) + N * periodicity]\ modulo\ (1024 * numberOfSlotsPerFrame * numberOfSymbolsPerSlot)$$ [Equation 14]

In Equation 14, $SFN_{start\ time\_subset\_n}$ may denote an SFN offset at a CG start time of an n-th CG subset, $slot_{start\ time\_subset\_n}$ may denote a slot offset at the CG start time of the n-th CG subset, and $symbol_{start\ time\_subset\_n}$ may denote a symbol offset at the CG start time of the n-th CG subset. In an embodiment, $SFN_{start\ time\_subset\_n}$ or $Slot_{start\ time\_subset\_n}$ may use the same value as that of the first (n=0) CG subset.

According to the aforementioned procedure, when the position of the N-th CG resource of the n-th CG subset is determined, the N-th resource in the n-th CG subset may be an (m=N * Nsubset + n)th resource in the CG configuration (N=0, 1, 2, ..., and n=0, 1, 2, ...). In the embodiment, it is assumed that an n value is a non-negative integer, but, if n is a natural number starting from 1, an n-1 value instead of n may be used in the equation.

In another embodiment, the position (i.e., Offset_n) of the n-th CG subset resource may be determined a certain period of time after the position of the first CG subset among the CG subsets configured in a single period. Specifically, after Type-1 CG is configured, the MAC device may determine the position of the N-th (N=0, 1, 2, ...) resource of the n-th (n=0, 1, 2, ...) CG subset resource, as a time point that satisfies conditions of Equation 15 below.

$$[(SFN * numberOfSlotsPerFrame * numberOfSymbolsPerSlot) + (\text{slot number in the frame} * numberOfSymbolsPerSlot) + \text{symbol number in the slot}] = (timeReferenceSFN * numberOfSlotsPerFrame * numberOfSymbolsPerSlot + timeDomainOffset * numberOfSymbolsPerSlot + S + Offset\_n + N * periodicity)\ modulo\ (1024 * numberOfSlotsPerFrame * numberOfSymbolsPerSlot)$$ [Equation 15]

In Equation 15, SFN denotes a current SFN value, numberOfSlotPerFrame denotes the number of slots per frame, numberOfSymbolsPerSlot denotes the number of symbols per slot, slot number in the frame denotes a current slot number within the frame, symbol number in the slot denotes a current symbol number within the slot, timeReferenceSFN denotes an SFN value that serves as a reference point for determining a CG position, timeDomainOffset denotes a time domain offset of a CG subset, and S denotes an S value determined by a physical layer. The n-th CG subset resource may start at a time point that is Offset_n after the first CG resource. The first CG resource (n=0) within the period may have an Offset_0 value of 0. In the disclosure, Offset_n is assumed to be in units of symbols, but an SFN-unit or slot-unit offset may be additionally configured according to the embodiment. If CG subsets are positioned in adjacent symbols, a value of Offset_n may be obtained by a symbol length (PUSCH duration) of the CG resource * n.

After Type-2 CG is configured, the MAC device may determine the position of the N-th (N=0, 1, 2, ...) resource of the n-th (n=0, 1, 2, ...) CG subset resource, as a time point that satisfies conditions of Equation 16 below.

$$[(SFN * numberOfSlotsPerFrame * numberOfSymbolsPerSlot) + (\text{slot number in the frame} * numberOfSymbolsPerSlot) + \text{symbol number in the slot}] = [(SFN_{start\ time} * numberOfSlotsPerFrame * numberOfSymbolsPerSlot + slot_{start\ time} * numberOfSymbolsPerSlot + symbol_{start\ time} + Offset\_n + N * periodicity]\ modulo\ (1024 * numberOfSlotsPerFrame * numberOfSymbolsPerSlot)$$ [Equation 16]

In Equation 16, $SFN_{start\ time}$ may denote an SFN offset at a first (n=0) CG start time, $slot_{start\ time}$ may denote a slot offset at the first (n=0) CG start time, and $symbol_{start\ timen}$ may denote a symbol offset at the first (n=0) CG start time. In some embodiments, $SFN_{start\ time\_subset\_n}$ or $slot_{start\ time\_subset\_n}$ may use the same value as that of the first (n=0) CG subset. Here, the n-th CG subset resource may start at a time point that is Offset_n after the first CG resource. The first CG resource (n=0) within the period may have an Offset_0 value of 0. In the disclosure, Offset_n is assumed to be in units of symbols, but an SFN-unit or slot-unit offset may be additionally configured according to the embodiment. If CG subsets are positioned in adjacent symbols, a value of Offset_n may be obtained by a symbol length (PUSCH duration) of the CG resource * n.

According to the aforementioned procedure, when the position of the N-th CG resource of the n-th CG subset is determined, the N-th resource in the n-th CG subset may be an (m=N * Nsubset + n)th resource in the CG configuration (N=0, 1, 2, ..., and n=0, 1, 2, ...). In the embodiment, it is assumed that an n value is a non-negative integer, but, if n is a natural number starting from 1, an n-1 value instead of n may be used in the equation.

Based on one of the schemes above, a UE and a base station may calculate a position of an m-th (m = 0, 1, 2, ...) CG resource in the CG configuration. In addition, an HARQ process ID to be used in the m-th CG resource may be calculated as shown in Equation 17 below.

$$\text{HARQ Process ID} = [m\ modulo\ nrofHARQ\text{-}Processes] + harq\text{-}ProcID\text{-}Offset2$$ [Equation 17]

Here, nrofHARQ-Processes may denote the number of HARQ processes in the CG configuration, and harq-ProcID-Offset2 may denote the HARQ process ID offset in the CG configuration.

In the embodiment of FIG. 8, it is assumed that there are two CG resources configured in a single period, and it is illustrated 801 that an HARQ process ID offset of CG is 2 and the number of HARQ processes is 2. Based on this, across multiple periods 800, 820, and 840, the CG resources configured in the CG configuration use an HARQ process ID according to the equation regardless of the CG subset. In the embodiment of FIG. 8, HPIs 2 and 3 may be repeatedly configured in the respective CG resources 810, 815, 830, 835, 850, 855, 870, and 875.

In some embodiments, the n-th CG subset may refer to an activated CG subset. In the embodiment, it is assumed that an n value is a non-negative integer, but, if n is a natural number starting from 1, an n-1 value instead of n may be used in the equation.

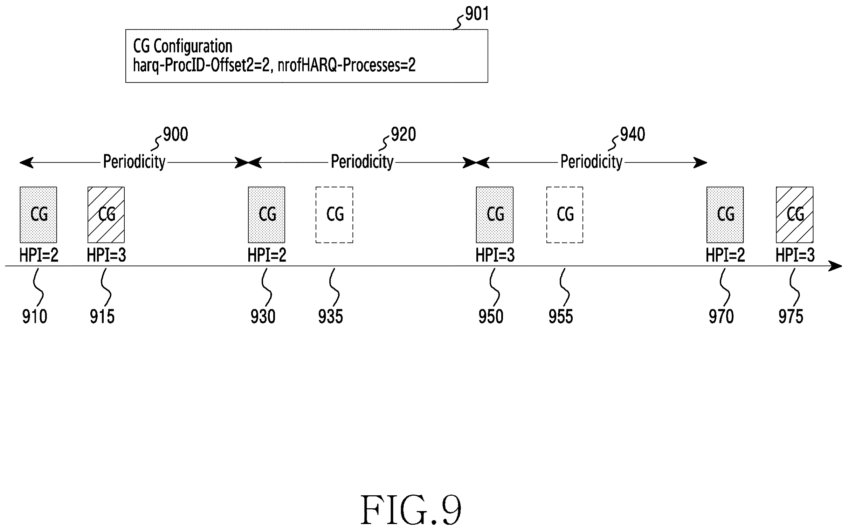

The embodiment of FIG. 9 illustrates a scheme by which an HARQ process ID of a CG resource is configured.

A CG resource is an uplink radio resource that a UE may transmit to a base station, and if there is no resource for the UE to transmit to the base station, the UE may skip uplink transmission without using an uplink radio resource. Furthermore, a CG resource or a CG subset may be deactivated and not used. Such an unused CG resource may be referred to as an unactivated (or deactivated) CG resource, wherein, by excluding the unactivated CG resource when calculating an HARQ process ID, the base station and the UE may secure more retransmission time for the CG. In other words, the UE and the base station may consider only an activated CG resource when calculating an HARQ process ID.

In the embodiment of FIG. 9, it is assumed that CG resources in operations 935 and 955 are resources that are not actually used. Based on this, across multiple periods 900, 920, and 940, when m-th CG resources are calculated in a CG configuration, the CG resources in operations 935 and 955 may be excluded. Subsequently, the UE and base station may calculate an HARQ process ID based on the HARQ process ID calculation procedure described with reference to FIG. 8. In the embodiment of FIG. 9, it is assumed that there are two CG resources configured in a single period, and it is illustrated 901 that an HARQ process ID offset of CG is 2 and the number of HARQ processes is 2. Based on this, across the multiple periods 900, 920, and 940, the activated CG resources configured in the CG configuration use an HARQ process ID according to the equation regardless of the CG subset. In the embodiment of FIG. 9, HPIs 2 and 3 may be repeatedly configured in respective CG resources 910, 915, 930, 950, 970, and 975. If the base station is able to identify which CGs are deactivated, the base station may not expect reception of the deactivated CG resources 935 and 955.

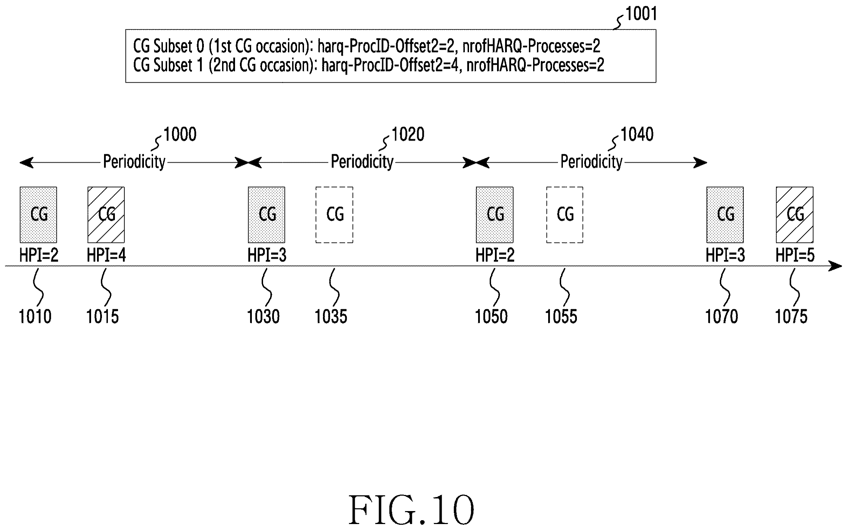

The embodiment of FIG. 10 illustrates a scheme by which an HARQ process ID of a CG resource is configured.

A CG resource is an uplink radio resource that a UE may transmit to a base station, and if there is no resource for the UE to transmit to the base station, the UE may skip uplink transmission without using an uplink radio resource. Furthermore, a CG resource or a CG subset may be deactivated and not used. Such an unused CG resource may be referred to as an unactivated (or deactivated) CG resource, wherein, by excluding the unactivated CG resource when calculating an HARQ process ID, the base station and the UE may secure more retransmission time for the CG. In other words, the UE and the base station may consider only an activated CG resource when calculating an HARQ process ID.

In the embodiment of FIG. 10, it is assumed that CG resources in operations 1035 and 1055 are resources that are not actually used. Based on this, across multiple periods 1000, 1020, and 1040, when m-th CG resources are calculated in a CG configuration, the CG resources in operations 1035 and 1055 may be excluded. Subsequently, the UE and base station may calculate an HARQ process ID based on the HARQ process ID calculation procedure described with reference to FIG. 7. In the embodiment of FIG. 10, it is assumed that there are two CG resources (two CG subsets) configured in a single period, and it is illustrated 1001 that CG subset 0 (i.e., first CG resources 1010, 1030, 1050, and 1070) has an HARQ process ID offset of 2 and two HARQ processes, and that CG subset 1 (i.e., second CG resources 1015, 1035, 1055, and 1075) has an HARQ process ID offset of 4 and two HARQ processes. Based on this, it is illustrated that, across multiple periods 11000, 1020, and 1040, HARQ process IDs (HPIs) 2 and 3 are repeated in CG subset 0 according to the equation, and HPIs 4 and 5 are repeated in the activated CG resources 1015 and 1075 in CG subset 1. If the base station is able to identify which CGs are deactivated, the base station may not expect reception of the deactivated CG resources 1035 and 1055.

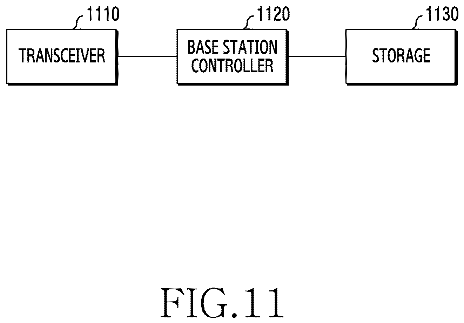

FIG. 11 illustrates a structure of a base station according to an embodiment of the disclosure.

Referring to FIG. 11, the base station may include a transceiver 1110, a base station controller 1120, and a storage 1130. As used herein, the base station controller 1120 may be defined as a circuit, an application specific integrated circuit, or at least one processor. The transceiver 1110 may transmit/receive signals with other network entities. For example, the transceiver 1110 may transmit system information to a UE, transmit synchronization signals, reference signals, or configuration information to the UE, and receive uplink data from the UE. The base station controller 1120 may control the overall operation of the base station according to the embodiments proposed in the disclosure. For example, the base station controller 1120 may control signal flows between the respective blocks to perform operations according to the above-described flowcharts. The storage 1130 may store at least one of information transmitted/received through the transceiver 1110 and information generated through the base station controller 1120.

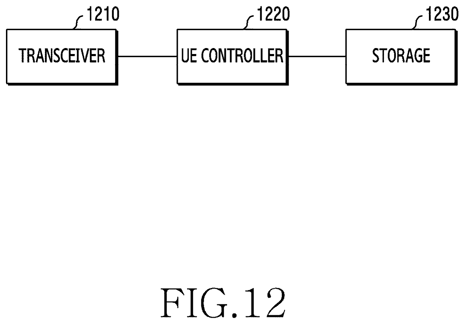

FIG. 12 illustrates a structure of a UE according to an embodiment of the disclosure.

14

Referring to FIG. 12, the UE may include a transceiver 1210, a UE controller 1220, and a storage 1230. As used herein, the UE controller 1220 may be defined as a circuit, an application specific integrated circuit, or at least one processor. The transceiver 1210 may transmit/receive signals with other network entities. For example, the transceiver 1210 may receive system information from a base station, receive synchronization signals, reference signals, or configuration information from the base station, and transmit uplink data to the base station. The UE controller 1220 may control the overall operation of the UE according to the embodiments proposed in the disclosure. For example, the UE controller 1220 may control signal flows between the respective blocks to perform operations according to the above-described flowcharts. The storage 1230 may store at least one of information transmitted/received through the transceiver 1210 and information generated through the UE controller 1220.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

Furthermore, the methods of the disclosure described above in FIGS. 1 to 12 may include methods in which one or more of the drawings are combined according to various implementations. For example, FIG. 1 to FIG. 12 may be combined to be connected (performed) as one flow. In addition, all or a part of an embodiment may be performed in combination with all or a part of one or more other embodiments. The disclosure may include methods in which one or more of the drawings are combined according to various implementations.

## Claims

1. A method performed by a terminal in a wireless communication system, the method comprising:

   receiving configuration information on a configured grant (CG) from a base station;
   based on the configuration information, identifying a plurality of CG physical uplink shared channels (PUSCHs) within a period;
   identifying a plurality of hybrid automatic repeat request (HARQ) process identities (IDs) for the plurality of CG PUSCHs; and
   transmitting the plurality of CG PUSCHs to the base station within the period according to the plurality of HARQ process IDs,
   wherein an HARQ process ID for a CG PUSCH among the plurality of CG PUSCHs is determined based on the order of the CG PUSCH within the period.

2. The method of claim 1, wherein the HARQ process ID for the CG PUSCH is determined according to an equation below, HARQ process ID = [N _subset*floor(CURRENT_symbol/periodicity)+n] modulo (nrofHARQ-Processes + harq-ProcID-Offset2),     [Equation]

where HARQ process ID denotes the HARQ process ID, N_subset denotes the number of CGs within the period, CURRENT_symbol denotes a first symbol of a first CG among the CGs within the period, periodicity denotes the period, n denotes the order of the CG PUSCH within the period, starting from 0, nrofHARQ-Processes denotes the number of HARQ processes, and harq-ProcID-Offset2 denotes an offset of the HARQ processes.

3. The method of claim 2, wherein, in case that the offset of the HARQ processes is not configured, harq-ProcID-Offset2 is 0.

4. The method of claim 2, wherein an N-th CG within the period starts (N-1)*offset symbols after a symbol from which the first CG within the period starts.

5. A method performed by a base station in a wireless communication system, the method comprising:

transmitting configuration information on a configured grant (CG) to a terminal; and
receiving a plurality of CG physical uplink shared channels (PUSCHs) from the terminal within a period based on the configuration information according to a plurality of hybrid automatic repeat request (HARQ) identities (IDs) for the plurality of CG PUSCHs,
wherein an HARQ process ID for a CG PUSCH among the plurality of CG PUSCHs is determined based on the order of the CG PUSCH within the period.

6. The method of claim 5, wherein the HARQ process ID for the CG PUSCH is determined according to an equation below, HARQ process ID = [N _subset*floor(CURRENT_symbol/periodicity)+n] modulo (nrofHARQ-Processes + harq-ProcID-Offset2),     [Equation]

where HARQ process ID denotes the HARQ process ID, N_subset denotes the number of CGs within the period, CURRENT _symbol denotes a first symbol of a first CG among the CGs within the period, periodicity denotes the period, n denotes the order of the CG PUSCH within the period, starting from 0, nrofHARQ-Processes denotes the number of HARQ processes, and harq-ProcID-Offset2 denotes an offset of the HARQ processes.

7. The method of claim 6, wherein: in case that the offset of the HARQ processes is not configured, harq-ProcID-Offset2 is 0; and
wherein an N-th CG within the period starts (N-1)*offset symbols after a symbol from which the first CG within the period starts.

8. A terminal in a wireless communication system, the terminal comprising:

a transceiver; and
a controller connected to the transceiver,
wherein the controller is configured to:

receive configuration information on a configured grant (CG) from a base station;
based on the configuration information, identify a plurality of CG physical uplink shared channels (PUSCHs) within a period;
identify a plurality of hybrid automatic repeat request (HARQ) process identities (IDs) for the plurality of CG PUSCHs; and
transmit the plurality of CG PUSCHs to the base station within the period according to the plurality of HARQ process IDs,
wherein an HARQ process ID for a CG PUSCH among the plurality of CG PUSCHs is determined based on the order of the CG PUSCH within the period.

9. The terminal of claim 8, wherein the HARQ process ID for the CG PUSCH is determined according to an equation below, HARQ process ID = [N _subset*floor(CURRENT_symbol/periodicity)+n] modulo (nrofHARQ-Processes + harq-ProcID-Offset2),

[Equation]

where HARQ process ID denotes the HARQ process ID, N_subset denotes the number of CGs within the period, CURRENT_symbol denotes a first symbol of a first CG among the CGs within the period, periodicity denotes the period, n denotes the order of the CG PUSCH within the period, starting from 0, nrofHARQ-Processes denotes the number of HARQ processes, and harq-ProcID-Offset2 denotes an offset of the HARQ processes.

10. The terminal of claim 9, wherein, in case that the offset of the HARQ processes is not configured, harq-ProcID-Offset2 is 0.

11. The terminal of claim 9, wherein an N-th CG within the period starts (N-1)*offset symbols after a symbol from which the first CG within the period starts.

12. A base station in a wireless communication system, the base station comprising:

a transceiver; and
a controller connected to the transceiver,
wherein the controller is configured to:

transmit configuration information on a configured grant (CG) to a terminal; and
receive a plurality of CG physical uplink shared channels (PUSCHs) from the terminal within a period based on the configuration information according to a plurality of hybrid automatic repeat request (HARQ) identities (IDs) for the plurality of CG PUSCHs,
wherein an HARQ process ID for a CG PUSCH among the plurality of CG PUSCHs is determined based on the order of the CG PUSCH within the period.

13. The base station of claim 12, wherein the HARQ process ID for the CG PUSCH is determined according to an equation below, HARQ process ID = [N _subset*floor(CURRENT_symbol/periodicity)+n] modulo (nrofHARQ-Processes + harq-ProcID-Offset2),

[Equation]

where HARQ process ID denotes the HARQ process ID, N_subset denotes the number of CGs within the period, CURRENT_symbol denotes a first symbol of a first CG among the CGs within the period, periodicity denotes the period, n denotes the order of the CG PUSCH within the period, starting from 0, nrofHARQ-Processes denotes the number of HARQ processes, and harq-ProcID-Offset2 denotes an offset of the HARQ processes.

14. The base station of claim 13, wherein, in case that the offset of the HARQ processes is not configured, harq-ProcID-Offset2 is 0.

15. The base station of claim 13, wherein an N-th CG within the period starts (N-1)*offset symbols after a symbol from which the first CG within the period starts.

EP 4 676 149 A2

FIG.1

CG Subset 0 (1st CG occasion): harq-ProcID-Offset2=2, nrofHARQ-Processes=2
CG Subset 1 (2nd CG occasion): harq-ProcID-Offset2=4, nrofHARQ-Processes=2

201

200                          220                          240
◄——————Periodicity——————►◄——————Periodicity——————►◄——————Periodicity——————►

| CG | CG | | CG | CG | | CG | CG | | CG | CG |

HPI=2   HPI=4        HPI=3   HPI=5        HPI=2   HPI=4        HPI=3   HPI=5

210     215          230     235          250     255          270     275

For each CG subset,
HARQ Process ID = [floor(CURRENT_symbol / periodicity)] modulo nrofHARQ-Processes + harq-ProcID-Offset2

FIG.2

301

CG Configuration
harq-ProcID-Offset2=2, nrofHARQ-Processes=4

300                           320                          340

←——————Periodicity——————→←——————Periodicity——————→←——————Periodicity——————→

| CG | | CG | | CG | | CG | | CG | | CG |

HPI=2    HPI=4         HPI=3    HPI=5        HPI=2    HPI=4         HPI=3    HPI=5

310      315           330      335          350      355           370      375

For the n-th CG subset (n=0,1,2,···)
HARQ Process ID = [floor(CURRENT_symbol / periodicity)] modulo (nrofHARQ-Processes/Nsubset) + n *
(nrofHARQ-Processes/Nsubset) + harq-ProcID-Offset2

# FIG.3

EP 4 676 149 A2

401

CG Configuration
harq-ProcID-Offset2=2, nrofHARQ-Processes=2

400 420 440

← Periodicity → ← Periodicity → ← Periodicity →

| CG | CG | | CG | CG | | CG | CG | | CG | CG |
|----|----|--|----|----|--|----|----|--|----|----|

HPI=2    HPI=3        HPI=2    HPI=3        HPI=2    HPI=3        HPI=2    HPI=3

410      415          430      435          450      455          470      475

For the n-th CG subset (n=0,1,2,···)
HARQ Process ID = [floor(CURRENT_symbol / (periodicity/Nsubset)) + n] modulo nrofHARQ-Processes
          + harq-ProcID-Offset2

FIG.4

EP 4 676 149 A2

501

CG Configuration
harq-ProcID-Offset2=2, nrofHARQ-Processes=2

500 520 540

← Periodicity → ← Periodicity → ← Periodicity →

| CG | CG | | CG | CG | | CG | CG | | CG | CG |
|---|---|---|---|---|---|---|---|---|---|---|
| HPI=2 | HPI=2 | | HPI=3 | HPI=3 | | HPI=2 | HPI=2 | | HPI=3 | HPI=3 |

510  515    530  535    550  555    570  575

For each CG subset,
HARQ Process ID = [floor(CURRENT_symbol / periodicity)] modulo nrofHARQ-Processes + harq-ProcID-Offset2

FIG.5

601

CG Configuration
harq-ProcID-Offset2=2, nrofHARQ-Processes=2

600

←————Periodicity————→←————Periodicity————→←————Periodicity————→
620
640

←—P/2—→←—P/2—→←—P/2—→←—P/2—→←—P/2—→←—P/2—→

| CG | CG | CG | CG | CG | CG | CG |
|---|---|---|---|---|---|---|
| HPI=2 | HPI=3 | HPI=2 | HPI=3 | HPI=2 | HPI=3 | HPI=2 |

610   615   630   635   650   655   670

HARQ Process ID = [floor(CURRENT_symbol / (periodicity / Nsubset))] modulo nrofHARQ-Processes + harq-ProcID-Offset2

FIG.6

CG Subset 0 (1st CG occasion): harq-ProcID-Offset2=2, nrofHARQ-Processes=2
CG Subset 1 (2nd CG occasion): harq-ProcID-Offset2=4, nrofHARQ-Processes=2

FIG.7

~801

CG Configuration
harq-ProcID-Offset2=2, nrofHARQ-Processes=2

~800          ~820          ~840

◄────── Periodicity ──────►◄────── Periodicity ──────►◄────── Periodicity ──────►

| CG | CG | | CG | CG | | CG | CG | | CG | CG |
| HPI=2 | HPI=3 | | HPI=2 | HPI=3 | | HPI=2 | HPI=3 | | HPI=2 | HPI=3 |

| 0th | 1st | | 2nd | 3rd | | 4th | 5th | | 6th | 7th |

| 810 | 815 | | 830 | 835 | | 850 | 855 | | 870 | 875 |

FIG.8

FIG.9

CG Subset 0 (1st CG occasion): harq-ProcID-Offset2=2, nrofHARQ-Processes=2
CG Subset 1 (2nd CG occasion): harq-ProcID-Offset2=4, nrofHARQ-Processes=2

1001

1000
Periodicity

1020
Periodicity

1040
Periodicity

CG HPI=2  CG HPI=4   CG HPI=3  CG   CG HPI=2  CG   CG HPI=3  CG HPI=5

1010  1015   1030  1035   1050  1055   1070  1075

FIG.10

EP 4 676 149 A2

FIG.11

```
  ┌─1210              ┌─1220              ┌─1230
┌──────────┐      ┌──────────────┐      ┌──────────┐
│TRANSCEIVER│─────│UE CONTROLLER │─────│ STORAGE  │
└──────────┘      └──────────────┘      └──────────┘
```

# FIG.12